Europäisches Patentamt

(19) European Patent Office

Office européen des brevets

(11) Publication number: **0 309 415 B1**

# (12) EUROPEAN PATENT SPECIFICATION

(45) Date of publication of patent specification :
03.04.91 Bulletin 91/14

(51) Int. Cl.⁵: **D06F 43/08, B01D 3/00,**
**B01D 1/00**

(21) Application number : 88830353.4

(22) Date of filing : 02.09.88

(54) **A circuit for the recovery of residual solvent from vapour lingering in the distilling apparatus of dry cleaning machines and/or systems.**

(30) Priority : 23.09.87 IT 361787

(43) Date of publication of application :
29.03.89 Bulletin 89/13

(45) Publication of the grant of the patent :
03.04.91 Bulletin 91/14

(84) Designated Contracting States :
DE ES FR GB SE

(56) References cited :
DE-A- 1 460 386
US-A- 3 177 126

(73) Proprietor : AMA UNIVERSAL S.p.A.
Via C. Bonazzi 2
I-40013 Castelmaggiore (Bologna) (IT)

(72) Inventor : Zucchini, Guido
Via del Lavoro, 6
I-40013 Castelmaggiore (Bologna) (IT)

(74) Representative : Pederzini, Paolo
c/o BUGNION S.p.A. Via Dei Mille, 19
I-40121 Bologna (IT)

Jouve, 18, rue Saint-Denis, 75001 PARIS

## Description

The invention relates to a circuit for the recovery of residual solvent from vapour that lingers in the solvent distilling apparatus generally built into dry cleaning machines and/or systems.

US-A-3177 126 discloses an apparatus for purifying slovents for dry cleaning machines having a condenser and a tank.

Conventional dry cleaning machines and equipment utilize solvents formulated to evaporate at low temperature, and it is well known that the purchase of such fluids represents one of the major items of expenditure in the related running costs.

These solvents are recovered, and their polluting vapours prevented from permeating the surrounding environment, by incorporating a closed circuit into the dry cleaning machine ; hot air is forced through the cleaning drum and into a condenser, cooling as it circulates, and the used solvent evaporated from the hot articles in the drum thus condenses and is directed back into the supply tank.

Solvent recovered in this way is recycled at given intervals by a distilling apparatus, likewise built into the machine, that purifies and regenerates fluid already used once or a number of times in the drum by removing contaminants such as water, grease or other foreign matter held in suspension ; Distilling apparatus of the type in question may operate continuously or intermittently ; whatever the individual types of apparatus, however, all have one feature in common, namely, that the foreign matter (sludge) precipitated from the solvent is deposited on the bottom of the chamber in which distillation occurs.

Sludge precipitated in this way normally collects in a drawer located at the base of the chamber, which will be removed at suitable intervals for disposal purposes.

With distillation accomplished, the inside of the chamber will be free of liquid, since the solvent directed into the apparatus evaporates completely ; nonetheless, it has been found that this internal environment remains saturated with solvent in the form of gas.

Thus it happens that, when the drawer is removed to effect disposal of the sludge, solvent lingering as gas in the distillation chamber is released into the environment, the results of which are pollution, and loss of a certain quantity of costly cleaning fluid.

It has also been observed that the sludge removed from the chamber is impregnated with solvent, and cannot therefore be disposed of without undergoing some form of special treatment.

The problem in question becomes highlighted further when one considers that the distillation chamber, saturated with gas as mentioned above, contains an amount of solvent quantifiable at between 7 and 7.5 grams per litre. Given that the distillation chamber will generally be of some 0.2 m$^3$ capacity, it follows that each distillation cycle will tend to leave one litre approximately of solvent in the chamber, in the form of gas, most of which is lost ; furthermore, the sludge precipitated by distillation tends to be contaminated by the gas.

The object of the invention is to overcome the above mentioned drawbacks.

The stated object is achieved with a circuit as defined in the appended claims ; the circuit in question, which serves to recover residual solvent contained in vapour that lingers in the distillation chamber of a dry cleaning fluid recycle system, comprises a condenser discharging into a collection tank, and a distillation chamber that connects with the condenser by way of a bottom outlet located marginally above the maximum level normally reached by the precipitated sludge.

The main advantage of the invention consists in the fact that it becomes possible to recover practically all of the solvent put through the recycle system, without the adoption of costly auxiliary circuits and/or devices.

The invention will now be described in detail, by way of example, with the aid of the accompanying drawings, in which :

fig 1 is a schematic representation of the recovery circuit according to the invention ;

fig 2 is the block diagram of a possible embodiment of a conventional dry cleaning machine incorporating the circuit according to the invention.

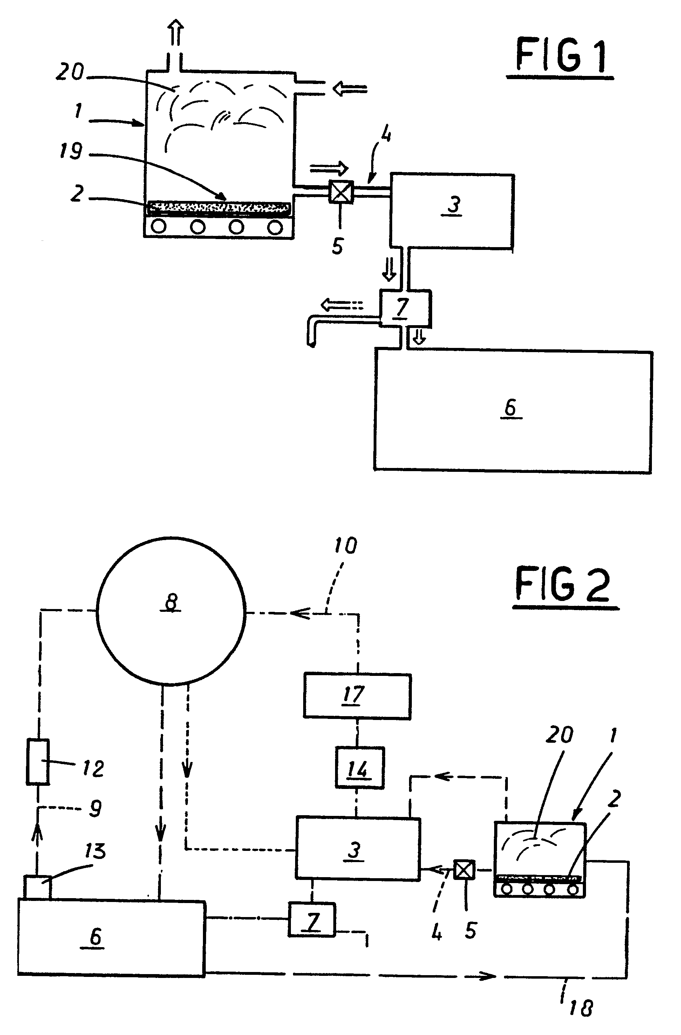

With reference to fig 1 of the drawings, 1 denotes the distilling apparatus of a dry cleaning machine internally of which solvent lingers in the form of vapour following distillation ; according to the invention, a circuit for recovering the solvent from this vapour comprises a condenser 3, with which the distillation chamber (denoted 20) connects by way of a bottom outlet 4, and a tank 6 for collection of the recovered fluid.

It is an essential feature of the circuit that the bottom outlet 4 leaves the distillation chamber 20 at a height marginally above the maximum level of the precipitated sludge 2, as in fig 1.

The condenser 3 may be an air or water cooled type, according to preference.

The option also exists of controlling the outlet 4 with a shut-off valve 5, and a preferred embodiment of the circuit will also include a trap 7 downstream of the condenser 3, which prevents any residual contaminants from entering the collection tank 6. It becomes sufficient, with a circuit thus embodied, to open up the shut-off valve 5 on completion of the distillation cycle, and thus allow residual fluid to leave the chamber 20 by way of the bottom outlet 4. With the valve 5 open, in fact, the condenser 3 will induce the remaining solvent, lingering as vapour inside the chamber 20, to drop into the condenser 3, then flow through the trap 7 and into the collection tank 6 as liquid.

The condenser 3 will continue to draw as long as the sludge 2 continues to give off recoverable vapour. On completion of this stage, both the distillation chamber 20 and the sludge 2 will be practically free of solvent, and the drawer 19 can be removed without any fear of releasing vapour with a high pollution content into the surrounding environment. Also, the sludge 2 itself requires no treatment, and can be disposed of as normal refuse.

A circuit according to the invention might also comprise means (not illustrated) designed to detect the presence of solvent inside the distillation chamber 20 and to trigger shut-down of the condenser 3 once the chamber is found to be clear of vapour. In the example of fig 2, the collection tank 6 and the condenser 3 are one and the same as those of the dry cleaning fluid supply and recycle circuits in a conventional machine.

A typical machine comprises a drum 8 in which items to be cleaned are tumbled, and to which two circuits are connected -viz, a wash circuit denoted 9, and a hot air circuit denoted 10. Pipelines forming part of the different circuits appear in fig 2 as phantom lines in which the breaks are dissimilar according to the function of the circuit ; a pipeline serving more than one circuit is denoted by a corresponding number of dissimilar lines (e.g. as between blocks 6 and 7).

The wash circuit 9 comprises the drum 8, a tank 6 connected with the drum, a filter 12, and a pump 13 the inlet of which connects with the filter, and the outlet with the drum.

The hot air circuit 10 incorporates the drum 8, a heater 17, a blower 14 and a condenser 3.

At the same time, the condenser 3 and the tank 6 are part of a recycle circuit 18 serving to purify and regenerate the used solvent, which also comprises a trap 7 and the distilling apparatus 1.

The purification circuit 18 is set in operation by operating the pump 13 in such a way as to direct the fluid from the tank 6 to the distilling apparatus 1, rather than into the drum 8. Vapour produced in the chamber 20 passes directly into the condenser 3, and falls thereafter through the trap 7 and back into the tank 6 as liquid.

Operation of the recovery circuit according to the invention, i.e. integrated with the recycle circuit of the standard machine, would not differ in any respect whatsoever even if the condenser in receipt of vapour from the distillation chamber 20 by way of the bottom outlet 4 were to be an auxiliary unit, for example, supplementing that of the standard hot air circuit.

Thus, the circuit according to the invention can be independent of or integrated into the circuits of the standard machine ; what is essential, in either instance, is that the bottom outlet 4 should leave the distillation chamber 20 at a height marginally above the maximum level of the sludge 2, in order to ensure that no sludge is drawn off by the action of the condenser 3 when the valve 5 is opened up.

## Claims

1. A circuit for the recovery of residual solvent from vapour lingering in the distilling apparatus of dry cleaning machines and/or systems comprising
   - a condenser (3), with which the distilling apparatus (1) connects by way of a bottom outlet (4) located at a height marginally above the maximum level reached by sludge (2) precipitated to the bottom of the distillation chamber (20) ;
   - a tank (6) for collection of the recovered solvent, with which the condenser (3) connects directly or indirectly.

2. A circuit as in claim 1, wherein the condenser (3) and the tank (6) constitute part of a circuit (18) forming part of the standard dry cleaning machine.

3. A circuit as in claim 1, wherein the outlet (4) is controlled by a shut-off valve (5) that can be operated in such a way as to connect the distilling apparatus (1) with the condenser (3) to the end of recovering solvent that lingers in the apparatus (1) as gas, following the distillation cycle.

## Ansprüche

1. Kreislauf zur Zurückgewinnung von Lösungsmittelresten aus dem im Destillierapparat von Reinigungsmaschinen und/oder -systemen zurückgebliebenen Dampf, enthaltend
   - einen Kondensator (3), mit dem Destillierapparat (1) durch einen unteren Ablauf (4) verbunden, der auf einer Höhe leicht über dem maximalen Stand angeordnet ist, den der auf den Boden der Destillierkammer (20) sinkende Schlamm (2) erreicht ;
   - einen Behälter (6) zum Sammeln des zurückgewonnenen Lösungsmittels, mit welchem der Kondensator direkt oder indirekt verbunden ist.

2. Kreislauf nach Patentanspruch 1, dadurch gekennzeichnet, dass der Kondensator (3) und der Behälter (6) den Teil eines Kreislaufes bilden, der bereits zu der normalen Reinigungsmaschine gehört.

3. Kreislauf nach Patentanspruch 1, dadurch gekennzeichnet, dass der Ablauf (4) durch ein Absperrventil (5) gesteuert wird, welches so ausgelegt sein kann, dass es den Destillierapparat (1) mit dem Kondensator (3), um im Anschluss an den Destillationszyklus das Lösungsmittel zurückzugewinnen, dass sich in dem Apparat (1) in einem gasförmigen Zustand befindet.

## Revendications

1. Circuit pour la récupération du solvant résiduel de la vapeur subsistante dans les appareils de distillation des machines et/ou systèmes à nettoyer à sec, comportant :
   − un condenseur (3) auquel est relié l'appareil de distillation (1) au moyen d'une sortie inférieure (4) située à une hauteur légèrement au-dessus du niveau maximum atteint par la boue (2) précipitée au fond de la chambre de distillation (20) ;
   − un réservoir (6) destiné à recevoir le solvant récupéré et auquel le condenseur (3) est relié directement ou indirectement.

2. Circuit selon la revendication 1, caractérisé en ce que le condenseur (3) et le réservoir (6) font partie d'un circuit (18) déjà prévu dans une machine à nettoyer à sec standard.

3. Circuit selon la revendication 1, caractérisé en ce que la sortie (4) est contrôlée par une soupape d'arrêt (5) qui peut être actionnée en sorte de relier l'appareil de distillation (1) au condenseur (3) dans le but de récupérer le solvant subsistant dans l'appareil (1) sous forme de gaz, après le cycle de distillation.

FIG 1

FIG 2